# EUROPEAN PATENT APPLICATION

(11) **EP 4 708 422 A1**
(43) Date of publication of application: **11.03.2026**
(21) Application number: 25197258.4
(22) Date of filing: 21.08.2025
(51) Int. Cl.: H01M 10/04, H01M 10/0585, H01M 50/103, H01M 50/533, H01M 50/534, H01M 50/548

(54) **BLADE BATTERY AND BATTERY PACK INCLUDING SAME**

(30) Priority: 03.09.2024 CN 202411223558; 02.04.2025 CN 202510408288
(71) Applicant: CSI Energy Storage Co., Ltd., Suzhou Jiangsu 215000 (CN)
(72) Inventor: WANG, Chunlei, Suzhou, 215000 (CN); QIAN, Jianfeng, Suzhou, 215000 (CN); DONG, Zhu, Suzhou, 215000 (CN); ZHANG, Hailin, Suzhou, 215000 (CN); GAO, Lijun, Suzhou, 215000 (CN)
(74) Representative: Epping - Hermann - Fischer

(57) **Abstract**

Provided are a blade battery and a battery pack including the same. The blade battery includes: at least one positive plate, with a first tab and a second tab respectively disposed at two adjacent edges; a plurality of negative electrode plates, each having a third tab and a fourth tab respectively disposed at two adjacent edges, each of two opposite sides of each positive electrode plate being covered by one negative electrode plate, the first tab and the third tab being located at two opposite sides of the blade battery, and the second tab and the fourth tab being located at two opposite sides of the blade battery, respectively; a positive cover plate connected to the first tab and the second tab to form a positive electrode; and a negative cover plate connected to the third tab and the fourth tab to form a negative electrode.

## Description

### FIELD

The present disclosure relates to the field of battery technologies, and particularly, to a blade battery and a battery pack including the same.

### BACKGROUND

With the rapid development of new energy technologies, lithium-ion batteries have become increasingly prevalent in people's daily lives and work. To reduce costs, a current primary method is to increase the capacity and energy of individual cells, thereby realizing a cost reduction through spreading out manufacturing and material costs. However, due to issues such as winding technology limitations and uneven internal tension, wound prismatic cells with a high production efficiency cannot achieve ultra-large sizes or ultra-high capacities. Therefore, large-size stacked prismatic blade batteries have become an important focus for the development of the next generation of lithium-ion cells.

In the related art, as the capacity of individual cells gradually increases, a length of the blade battery also increases. During charging and discharging, electrons need to travel along a length direction between a positive cover plate and a negative cover plate that are located at two sides, respectively, which results in a long transmission distance, leading to increased internal resistance of the cell and notable polarization issues. The increased internal resistance causes greater heat generation within the cell, and thus a temperature of an operation environment of the cell is increased, which intensifies side reactions within the cell, reducing a cycle life. In addition, the greater heat generation within the cell indicates a high energy loss during charging and discharging. Moreover, large polarization of the cell affects charging of lithium batteries and therefore causes false charging. The cell is also unable to fully release its stored energy under a high-power condition or a low-temperature condition, seriously affecting use experience of a user.

### SUMMARY

The present disclosure aims to solve at least one of the technical problems in the related art. To this end, one objective of the present disclosure is to provide a blade battery that has advantages such as high charge-discharge energy efficiency, reduced internal resistance, and low energy loss.

The present disclosure further provides a battery pack including the blade battery.

To achieve the above objectives, according to an embodiment in a first aspect of the present disclosure, a blade battery is provided. The blade battery includes: at least one positive plate, each of the at least one positive plate having a first tab and a second tab that are respectively disposed at two adjacent edges of the positive plate; a plurality of negative plates, in which the at least one positive plate and the plurality of negative plates are stacked in a first direction with edges of the at least one positive plate and the plurality of negative plates flush with each other, the plurality of negative plates cover two opposite sides of the at least one positive plate in the first direction, and each of the plurality of negative plates is provided with a third tab and a fourth tab that are respectively disposed at two adjacent edges of the negative plate, the first tab and the third tab being located at two opposite sides of the blade battery, respectively, and the second tab and the fourth tab being located at two opposite sides of the blade battery, respectively; a positive cover plate having a conductive region located at two adjacent sides of the blade battery where the first tab and the second tab are located, the positive cover plate being connected to the first tab and the second tab to form a positive electrode; and a negative cover plate having a conductive region located at two adjacent sides of the blade battery where the third tab and the fourth tab are located, the negative cover plate being connected to the third tab and the fourth tab to form a negative electrode.

According to embodiments of the present disclosure, the blade battery has the advantages such as high charge-discharge energy efficiency, reduced internal resistance, and low energy loss.

According to some specific embodiments of the present disclosure, each of the first tab and the second tab is constructed as a full tab and is configured to continuously extend along a corresponding side edge of the positive plate, and each of the third tab and the fourth tab is configured to continuously extend along a corresponding side edge of the negative plate; and/or each of the first tab, the second tab, the third tab, and the fourth tab is configured as a rectangle or a trapezoid.

According to some specific embodiments of the present disclosure, the first tab and the second tab are bent relative to the positive plate to extend along the first direction and connected to the positive cover plate; and the third tab and the fourth tab are bent relative to the negative plate to extend along the first direction and connected to the negative cover plate.

According to some specific embodiments of the present disclosure, the positive cover plate includes a positive end plate and a positive conductive sheet connected to the positive end plate at a side of the positive end plate facing the positive plate, the positive conductive sheet being electrically connected to each of the first tab and the second tab; and/or the negative cover plate includes a negative end plate and a negative conductive sheet connected to the negative end plate at a side of the negative end plate facing the negative plate, the negative conductive sheet being electrically connected to each of the third tab and the fourth tab.

Further, the positive conductive sheet includes: a first conductive portion attached to the positive end plate and connected to the first tab; and a second conductive portion connected to the first conductive portion and bent relative to the first conductive portion, the second conductive portion being connected to the second tab; and/or the negative conductive sheet includes: a third conductive portion attached to the negative end plate and connected to the third tab; and a fourth conductive portion connected to the third conductive portion and bent relative to the third conductive portion, the fourth conductive portion being connected to the fourth tab.

Further, each of the at least one positive plate and the plurality of negative plates is configured as a rectangle; the second conductive portion is configured to continuously extend along a long edge of the positive plate; and the fourth conductive portion is configured to continuously extend along a long edge of the negative plate.

According to some specific embodiments of the present disclosure, the positive cover plate further includes a positive pole, the positive pole passing through the positive end plate and being connected to the positive conductive sheet; and/or the negative cover plate further includes a negative pole, the negative pole passing through the negative end plate and being connected to the negative conductive sheet.

According to some specific embodiments of the present disclosure, the blade battery further includes: an encapsulation housing. End faces of the encapsulation housing in a second direction have openings for exposing the positive end plate and the negative end plate, each of the at least one positive plate and the plurality of negative plates being accommodated within the encapsulation housing, and the second direction intersecting the first direction.

According to some specific embodiments of the present disclosure, the positive conductive sheet is an aluminum sheet, and the positive conductive sheet is welded to each of the first tab and the second tab; and/or the negative conductive sheet is a copper sheet, and the negative conductive sheet is welded to each of the third tab and the fourth tab.

According to some specific embodiments of the present disclosure, an elongated rectangle formed by each of the at least one positive plate and the plurality of negative plates has a long edge ranging from 500 mm to 1,350 mm; and/or the blade battery has a thickness ranging from 25 mm to 40 mm; and/or the blade battery has a short edge ranging from 200 mm to 319 mm.

Further, a ratio of length to thickness of the blade battery ranges from 12.5:1 to 40:1; and/or a ratio of length to width of the blade battery ranges from 1.57:1 to 6.75:1; and/or a ratio of width to thickness of the blade battery ranges from 5:1 to 13:1.

According to some specific embodiments of the present disclosure, a conductive agent of each of the at least one positive plate includes conductive carbon black and carbon nanotubes; and a conductive agent of each of the plurality of negative plates includes conductive carbon black.

Further, a mass percentage of the conductive carbon black in the conductive agent of each of the at least one positive plate ranges from 0.5% to 1.0%, and a mass percentage of the carbon nanotubes in the conductive agent of each of the at least one positive plate ranges from 0.5% to 1.0%; and a mass percentage of the conductive carbon black in the conductive agent of each of the plurality of negative plates ranges from 0.5% to 1.0%.

According to some specific embodiments of the present disclosure, each of the first tab, the second tab, the third tab, and the fourth tab has a thickness ranging from 1 µm to 20 µm.

According to an embodiment in a second aspect of the present disclosure, a battery pack is provided. The battery pack includes: a battery case; and a plurality of blade batteries arranged in a thickness direction of the plurality of blade batteries and mounted in the battery case, each of the plurality of blade batteries being the blade battery according to any of the above embodiments of the present disclosure.

According to embodiments of the present disclosure, by using the blade battery according to any of the above embodiments of the present disclosure, the battery pack has advantages such as high charge-discharge energy efficiency, reduced internal resistance, and low energy loss.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic structural view of a blade battery in the related art.
FIG. 2 is a schematic structural view of a blade battery according to an embodiment of the present disclosure.
FIG. 3 is a schematic view of a positive plate of a blade battery according to an embodiment of the present disclosure.
FIG. 4 is a schematic view of a negative plate of a blade battery according to an embodiment of the present disclosure.
FIG. 5 is a schematic view illustrating a stacked arrangement of a positive plate and a negative plate of a blade battery according to an embodiment of the present disclosure.
FIG. 6 is a schematic view of a positive cover plate of a blade battery according to an embodiment of the present disclosure.
FIG. 7 is a schematic view of a negative cover plate of a blade battery according to an embodiment of the present disclosure.
FIG. 8 is a schematic internal structural view of a blade battery according to an embodiment of the present disclosure.
FIG. 9 is a schematic assembled view of a blade battery according to an embodiment of the present disclosure.

Reference numerals of the accompanying drawings:
FIG. 1:
   blade battery 1', positive cover plate 300', negative cover plate 400';
FIG. 2 to FIG. 9:
   blade battery 1, positive plate 100, first tab 101, second tab 102, negative plate 200,
   third tab 201, fourth tab 202, positive cover plate 300, negative cover plate 400, encapsulation housing 500,
   separator 600,
   positive end plate 310, positive conductive sheet 320, negative end plate 410, negative conductive sheet 420,
   first conductive portion 321, second conductive portion 322, third conductive portion 421, fourth conductive portion 422,
   positive pole 330, negative pole 430, explosion-proof valve 340, liquid injection hole 350, opening 501.

### DETAILED DESCRIPTION

In the description of the present disclosure, it should be understood that, the orientation or the position indicated by terms such as "center", "longitudinal", "transverse", "length", "width", "thickness", "over", "below", "front", "rear", "left", "right", "vertical", "horizontal", "top", "bottom", "inner", "outer", "axial", "radial", and "circumferential" should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In the description of the present disclosure, "first feature" and "second feature" may include one or more of these features.

In the description of the present disclosure, "plurality" means two or more.

In the description of the present disclosure, the first feature "on" or "under" the second feature may mean that the first feature is in direct contact with the second feature, or the first and second features are in indirect contact through another feature between them.

In the description of the present disclosure, the first feature "above" the second feature means that the first feature is directly above or obliquely above the second feature, or simply means that the level of the first feature is higher than that of the second feature.

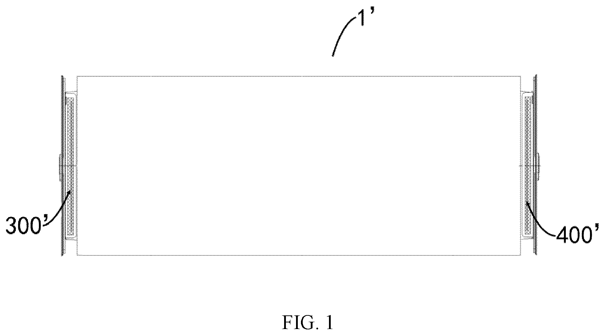

As illustrated in FIG. 1, a blade battery 1' generally adopts a structure in which a positive cover plate 300' and a negative cover plate 400' are oppositely arranged. During charging and discharging, electrons need to travel along a length direction of the blade battery 1' from the positive cover plate 300' at one side to the negative cover plate 400' at another side, which results in a long transmission distance, leading to high internal resistance. To solve the above problems, the present disclosure provides a new type of blade battery 1.

The blade battery 1 according to embodiments of the present disclosure will be described below with reference to the accompanying drawings.

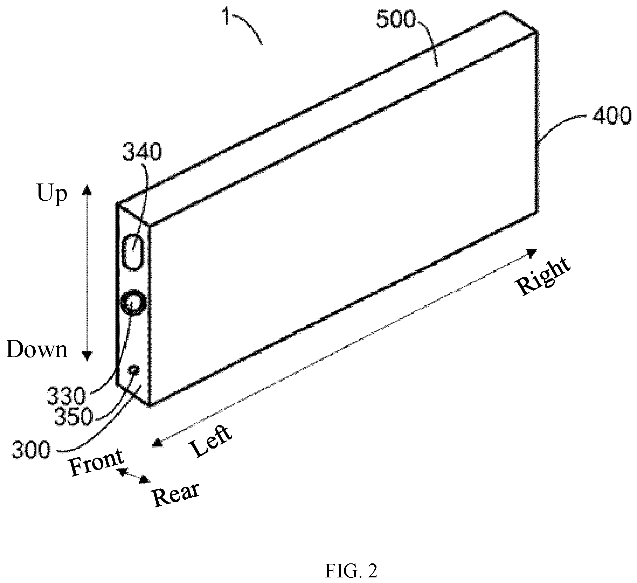

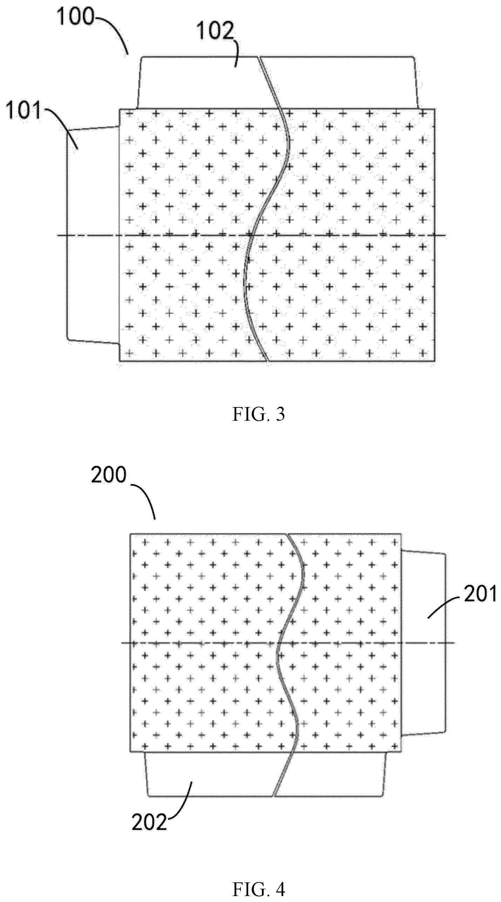

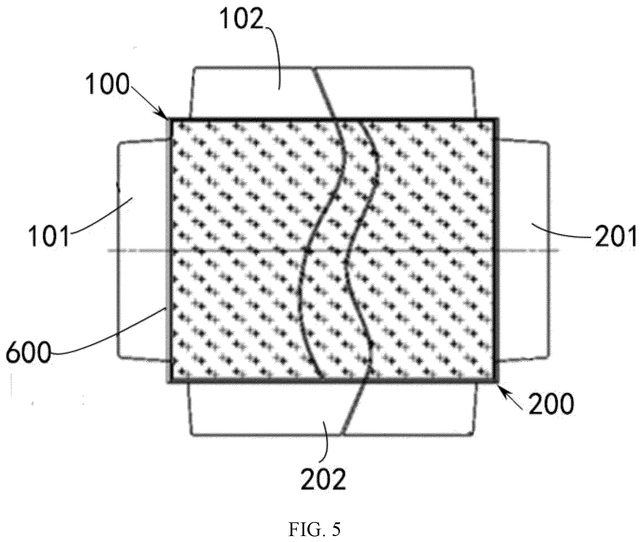

As illustrated in FIG. 2 to FIG. 9, the blade battery 1 according to an embodiment of the present disclosure includes at least one positive plate 100, a plurality of negative plates 200, a positive cover plate 300, and a negative cover plate 400. As illustrated in FIG. 3, the positive plate 100 is provided with a first tab 101 and a second tab 102 that are respectively disposed at two adjacent edges of the positive plate 100. each of two opposite sides of each of the positive plate 100 is covered by the plurality of negative plates. As illustrated in FIG. 4, the negative plate 200 is provided with a third tab 201 and a fourth tab 202 that are respectively disposed at two adjacent edges of the negative plate 200. The positive plate 100 and the negative plate 200 are stacked with edges of the positive plate 100 and the negative plate 200 flush with each other. The first tab 101 and the third tab 201 are located at two opposite sides of the blade battery 1, respectively. The second tab 102 and the fourth tab 202 are located at two opposite sides of the blade battery 1, respectively. The positive cover plate 300 is located at two adjacent edges of the blade battery 1. A conductive region of the positive cover plate 300, such as a positive conductive sheet 320, is connected to the first tab 101 and the second tab 102 to form a positive electrode. A conductive region of the negative cover plate 400, such as a negative conductive sheet 420, is located at two adjacent edges of the blade battery 1. The negative cover plate 400 is connected to the third tab 201 and the fourth tab 202 to form a negative electrode.

It should be noted that the two adjacent edges of the blade battery 1 refer to side edges of a plane parallel to the positive plate 100 and the negative plate 200, i.e., side edges of a plane defined by a length and a width of the blade battery 1. The conductive region of the positive cover plate 300 and the conductive region of the negative cover plate 400 are located at side edges of the blade battery 1 and each are configured to extend along a thickness direction of the blade battery 1 to cover all the positive plates 100 and negative plates 200, which facilitates a connection of the conductive region of the positive cover plate 300 to the first tab 101 and the second tab 102, and a connection of the conductive region of the negative cover plate 400 to the third tab 201 and the fourth tab 202.

For example, a plurality of positive plates 100 and a plurality of negative plates 200 are provided. The plurality of positive plates 100 and the plurality of negative plates 200 are in a same shape and have outer contours coinciding with each other. The plurality of positive plates 100 and the plurality of negative plates 200 are sequentially stacked on each other, with each positive plate 100 and each negative plate 200 separated by a separator 600. The blade battery 1 with a high charge-discharge energy efficiency is obtained through full enclosure welding, liquid injection, formation, and capacity grading. Each of the first tab 101 and the second tab 102 is located at a middle of a respective edge of the positive plate 100, while each of the third tab 201 and the fourth tab 202 is located at a middle of a respective edge of the negative plate 200. The first tab 101 and the third tab 201 are symmetrically arranged at two opposite edges of the blade battery 1. The second tab 102 and the fourth tab 202 are symmetrically arranged at another two opposite edges of the blade battery 1. Electrons can travel along the length direction towards the first tab 101 and the third tab 201, or along a width direction towards the second tab 102 and the fourth tab 202.

With the blade battery 1 according to the embodiments of the present disclosure, the first tab 101 and the second tab 102 are formed at the two adjacent edges of the positive plate 100, and the third tab 201 and the fourth tab 202 are formed at the two adjacent edges of the negative plate 200. In the blade battery 1, electrons travel between the first tab 101 and the third tab 201 and between the second tab 102 and the fourth tab 202, forming two electron travel paths inside the blade battery 1 along both the length direction and the width direction. During charging and discharging, internal resistance of a cell formed by the positive plate 100 and the negative plate 200 is significantly reduced, which in turn decreases heat generation, reducing an energy loss, prolonging a service life of the blade battery 1, and improving an energy efficiency. In addition, enabling the electrons to travel in different directions also enhances charging and discharging capabilities. During charging of the blade battery 1, the cell formed by the positive plate 100 and the negative plate 200 can be fully charged, ensuring sufficient energy storage. During discharging of the blade battery 1, the stored energy can be fully released, enhancing user experience.

Therefore, the blade battery 1 according to the embodiments of the present disclosure has advantages such as high charge-discharge energy efficiency, reduced internal resistance, and low energy loss.

In some specific embodiments of the present disclosure, each of the first tab 101 and the second tab 102 is constructed as a full tab and is configured to continuously extend along a corresponding side edge of the positive plate 100, and each of the third tab 201 and the fourth tab 202 is configured to continuously extend along a corresponding side edge of the negative plate 200. That is, each of the first tab 101, the second tab 102, the third tab 201, and the fourth tab 202 has a continuously extending integral structure. This design facilitates a connection of the first tab 101 and the second tab 102 to the positive cover plate 300, and a connection of the third tab 201 and the fourth tab 202 to the negative cover plate 400. On the other hand, a current conduction area of the first tab 101, the second tab 102, the third tab 201, and the fourth tab 202 can be increased, reducing the internal resistance of the blade battery 1.

The first tab 101 is formed as the full tab extending along an entire edge of the positive plate 100. The second tab 102 is formed as the full tab extending along another entire edge of the positive plate 100. When the first tab 101 and the second tab 102 are electrically connected to the positive plate 100, a cross-sectional area for current flow is large, which reduces the internal resistance. Due to the reduced internal resistance, a voltage drop during high-current charging and discharging is reduced, enabling more efficient output and reception of electrical energy. That is, the first tab 101 and the second tab 102 correspond in position to and form electrical connections with the positive cover plate 300, and a contact area between each of the first tab 101 and the second tab 102 of the positive plate 100 and the positive cover plate 300 is large, which results in a large conduction area for electrons, improving a current-carrying capacity of the positive plate 100.

Similarly, the third tab 201 is formed at an edge of the negative plate 200 as the full tab entirely in an elongated shape, and the fourth tab 202 is formed at another edge of the negative plate 200 as the full tab entirely in an elongated shape. When the third tab 201 and the fourth tab 202 are electrically connected to the negative plate 200, the cross-sectional area for current flow is large, which reduces the internal resistance. With the reduced internal resistance, the voltage drop during high-current charging and discharging is reduced, enabling more efficient output and reception of electrical energy. That is, the third tab 201 and the fourth tab 202 correspond in position to and form electrical connections with the negative cover plate 400, and a contact area between each of the third tab 201 and the fourth tab 202 of the negative plate 200 and the negative cover plate 400 is large, which results in a large conduction area for electrons, improving a current-carrying capacity of the negative plate 200.

In other embodiments, each of the first tab 101, the second tab 102, the third tab 201, and the fourth tab 202 is configured as a rectangle or a trapezoid. An entire region along an edge of the positive plate 100 is formed as the first tab 101 in a shape of a rectangle or a trapezoid. An entire region along another edge of the positive plate 100 is formed as the second tab 102 in a shape of a rectangle or a trapezoid. Similarly, an entire region along an edge of the negative plate 200 is formed as the third tab 201 in a shape of a rectangle or a trapezoid, and an entire region along another edge of the negative plate 200 is formed as the fourth tab 202 in a shape of a rectangle or a trapezoid.

By constructing the tabs in the shape of a rectangle or a trapezoid, both the first tab 101 having a full-tab structure and the second tab 102 having a full-tab structure that are located at the positive plate 100 can conduct electrons. Likewise, both the third tab 201 having a full-tab structure and the fourth tab 202 having a full-tab structure that are located at the negative plate 200 can conduct electrons. In this way, an energy density of the blade battery 1 is increased.

In some specific embodiments of the present disclosure, the first tab 101 and the second tab 102 are bent relative to the positive plate 100 and connected to the positive cover plate 300; and the third tab 201 and the fourth tab 202 are bent relative to the negative plate 200 and connected to the negative cover plate 400.

Specifically, each of the first tab 101 and the second tab 102 is constructed to have a folded structure of approximately 90° relative to the positive plate 100, while each of the third tab 201 and the fourth tab 202 is constructed to have a folded structure of approximately 90° relative to the negative plate 200. As such, the first tab 101 and the second tab 102 are attached to a surface of the positive cover plate 300, forming surface-to-surface contact; likewise, the third tab 201 and the fourth tab 202 are attached to a surface of the negative cover plate 400, also forming surface-to-surface contact. Such an arrangement facilitates welding of the first tab 101 and the second tab 102 to the positive cover plate 300, and welding of the third tab 201 and the fourth tab 202 to the negative cover plate 400, ensuring a constant electrical connection and offering high reliability.

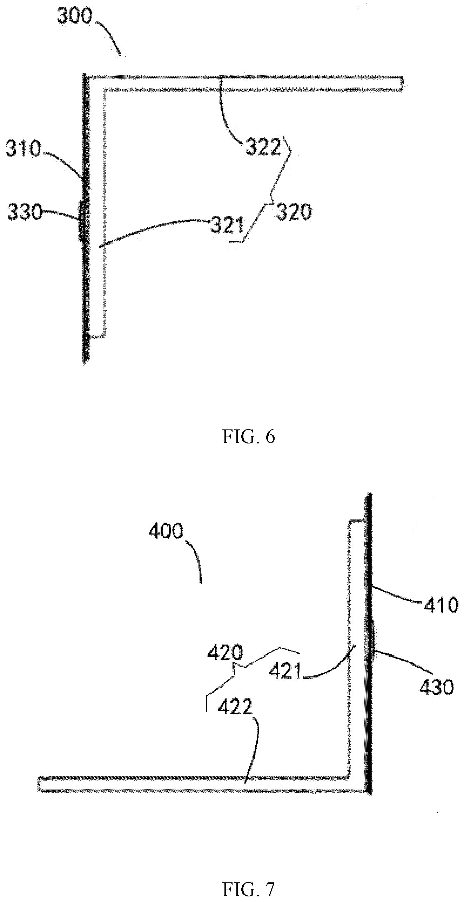

In some specific embodiments of the present disclosure, as illustrated in FIG. 6, the positive cover plate 300 includes a positive end plate 310 and a positive conductive sheet 320 connected to the positive end plate 310 at a side of the positive end plate 310 facing the positive plate 100. The positive conductive sheet 320 is electrically connected to each of the first tab 101 and the second tab 102. On one hand, the positive end plate 310 serves to seal the blade battery 1 at an end of the blade battery 1. On the other hand, the positive end plate 310 acts as a carrier for the positive conductive sheet 320. The positive conductive sheet 320 is welded to the positive end plate 310 to establish an electrical connection, and also connected to the first tab 101, the second tab 102, and the positive plate 100 for conduction purposes.

Similarly, as illustrated in FIG. 7, the negative cover plate 400 can include a negative end plate 410 and a negative conductive sheet 420 connected to the negative end plate 410 at a side of the negative end plate 410 facing the negative plate 200. The negative conductive sheet 420 is electrically connected to each of the third tab 201 and the fourth tab 202. On one hand, the negative end plate 410 serves to seal the blade battery 1 at another end of the blade battery 1. On the other hand, the negative end plate 410 acts as a carrier for the negative conductive sheet 420. The negative conductive sheet 420 is welded to the negative end plate 410 to establish an electrical connection, and also connected to the third tab 201, the fourth tab 202, and the negative plate 200 for conduction purposes.

Further, as illustrated in FIG. 6, the positive conductive sheet 320 includes a first conductive portion 321 and a second conductive portion 322. The first conductive portion 321 is attached to the positive end plate 310 and connected to the first tab 101. The second conductive portion 322 is connected to the first conductive portion 321 and bent perpendicularly relative to the first conductive portion 321. The second conductive portion 322 is connected to the second tab 102. For example, the first conductive portion 321 and the second conductive portion 322 are formed by bending one conductive sheet. As illustrated in FIG. 7, the negative conductive sheet 420 can include a third conductive portion 421 and a fourth conductive portion 422. The third conductive portion 421 is attached to the negative end plate 410 and connected to the third tab 201. The fourth conductive portion 422 is connected to the third conductive portion 421 and bent perpendicularly relative to the third conductive portion 421. The fourth conductive portion 422 is connected to the fourth tab 202. For example, the third conductive portion 421 and the fourth conductive portion 422 are formed by bending one conductive sheet. In this way, conductive structures of the positive conductive sheet 320 and the negative conductive sheet 420 do not occupy too much space, but offer good electrical conductivity.

Further, each of the positive plate 100 and the negative plate 200 is configured as an elongated rectangle. The second conductive portion 322 is configured to continuously extend along a long edge of the positive plate 100. The fourth conductive portion 422 is configured to continuously extend along a long edge of the negative plate 200.

Wavy lines in a middle of FIG. 3 and FIG. 4 represent break lines indicating that portions along length directions of the positive plate 100 and the negative plate 200 are omitted. By enabling the second conductive portion 322 to extend along the length direction of the positive plate 100 and the fourth conductive portion 422 to extend along the length direction of the negative plate 200, a large cross-sectional area for current conduction is formed at each of one long edge of the positive plate 100 and one long edge of the negative plate 200, i.e., a current conduction channel can be formed at each entire long edge of the blade battery 1, greatly enhancing a current conduction capability of the blade battery 1.

In some specific embodiments of the present disclosure, as illustrated in FIG. 6 and FIG. 7, the positive cover plate 300 further includes a positive pole 330. The positive pole 330 passes through the positive end plate 310 and is connected to the positive conductive sheet 320. Similarly, the negative cover plate 400 can include a negative pole 430. The negative pole 430 passes through the negative end plate 410 and is connected to the negative conductive sheet 420.

By enabling the positive pole 330 to pass through the positive cover plate 300 and be connected to the positive conductive sheet 320 and the negative pole 430 to pass through the negative cover plate 400 and be connected to the negative conductive sheet 420, an individual blade battery 1 can be connected to cells of another blade battery 1 or an external circuit while ensuring structural integrity of an end face of the blade battery 1.

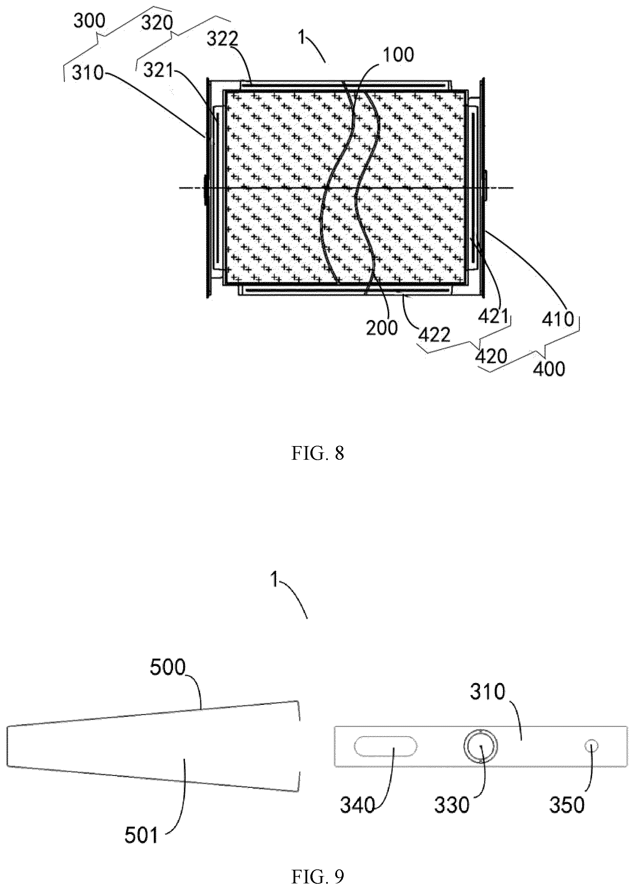

In some specific embodiments of the present disclosure, as illustrated in FIG. 9, the blade battery 1 further includes an encapsulation housing 500. End faces of the encapsulation housing 500 at the blade battery 1 have openings 501 for exposing the positive end plate 310 and the negative end plate 410. Each of the positive plate 100 and the negative plate 200 is accommodated within the encapsulation housing 500.

For example, the encapsulation housing 500 is constructed as a frame-shaped structure having an access port at a side of the encapsulation housing 500. After the positive plate 100, the negative plate 200, the positive cover plate 300, and the negative cover plate 400 are assembled, the entire assembly is placed into the encapsulation housing 500 through the access port. After the assembly, the positive cover plate 300 and the negative cover plate 400 correspond to the openings 501 at two sides of the encapsulation housing 500, respectively, and the access port of the encapsulation housing 500 is welded shut. In addition, the openings 501 at the two sides of the encapsulation housing 500 are welded respectively to the positive cover plate 300 and the negative cover plate 400, in such a manner that a complete sealed structure is formed by the positive cover plate 300, the negative cover plate 400, and the encapsulation housing 500, which enables an electrolyte to be contained and provides protection for the positive plate 100 and the negative plate 200.

Further, as illustrated in FIG. 9, at least one of the positive end plate 310 and the negative end plate 410 is constructed with a liquid injection hole 350, allowing for an injection of a liquid into the positive plate 100 and the negative plate 200 inside the encapsulation housing 500. Additionally, at least one of the positive end plate 310 and the negative end plate 410 is constructed with an explosion-proof valve 340. When a pressure inside the encapsulation housing 500 becomes too high, the explosion-proof valve 340 can release the pressure to prevent the blade battery 1 from exploding.

In some specific embodiments of the present disclosure, the positive conductive sheet 320 is an aluminum sheet and welded to each of the first tab 101 and the second tab 102, and the negative conductive sheet 420 is a copper sheet and welded to each of the third tab 201 and the fourth tab 202. For example, laser welding is adopted.

Specifically, the first tab 101 and the second tab 102 may be laser-welded to the positive conductive sheet 320 constructed as the aluminum sheet, and the third tab 201 and the fourth tab 202 may be laser-welded to the negative conductive sheet 420 constructed as the copper sheet. Copper and aluminum are materials that meet requirements for current collectors and provide satisfactory weldability.

In some specific embodiments of the present disclosure, as illustrated in FIG. 1, the blade battery 1 is configured as a rectangular parallelepiped, and has a length ranging from 500 mm to 1,350 mm, a thickness ranging from 25 mm to 40 mm, and a width ranging from 200 mm to 319 mm.

It should be understood that, a dimension of the blade battery 1 mentioned here refers to a dimension of an individual blade battery 1, rather than a battery pack. The length of the blade battery 1 refers to a dimension of the blade battery 1 in a left-right direction in FIG. 1. The thickness of the blade battery 1 refers to a dimension of the blade battery 1 in a front-rear direction in FIG. 1. The width of the blade battery 1 refers to a dimension of the blade battery 1 in an up-down direction in FIG. 1. The front-rear direction in FIG. 1 can also be referred to as a first direction, while the up-down direction can also be referred to as a second direction.

To reduce manufacturing costs of the cell formed by the positive plate 100 and the negative plate 200 of the blade battery 1 and save cell materials, the length, the width, and the thickness of the blade battery 1 according to the embodiments of the present disclosure are all relatively large, ensuring a large battery capacity reaching over 500 Ah. It should be understood that, if the length, the width, and the thickness of the blade battery 1 are too small, the battery capacity is affected; however, if the length and the width of the blade battery 1 are too large, polarization performance is impacted. In the present disclosure, the individual blade battery 1 has the thickness maintained in a range ranging from 25 mm to 40 mm, the length maintained in a range ranging from 500 mm to 1,350 mm, and the height maintained in a range ranging from 200 mm to 319 mm. The blade battery 1 is formed to have a thin sheet-like structure, achieving a thin design. Within these ranges, the blade battery 1 has a large length and a large width while maintaining a thin thickness, which enables effective heat transfer from a center of the cell to an outside while ensuring cell capacity and polarization performance, improving overall temperature uniformity of the cell.

Further, a ratio of length to thickness of the blade battery 1 ranges from 12.5:1 to 40:1; and/or a ratio of length to width of the blade battery 1 ranges from 1.57:1 to 6.75:1; and/or a ratio of width to thickness of the blade battery 1 ranges from 5:1 to 13:1. While limiting the dimension of the blade battery 1, ratios among the length, the width, and the height of the blade battery 1 are also optimized. By increasing the ratios of the length and the width to the height of the blade battery 1, the blade battery 1 forms a larger and thinner structure, which can more effectively solve heat dissipation issues and reduce side reactions within the cell. In the blade battery according to the embodiments of the present disclosure, with the unique design of the first tab 101, the second tab 102, the third tab 201, and the fourth tab 202, electrons in the blade battery 1 travel between the first tab 101 and the third tab 201 and between the second tab 102 and the fourth tab 202, forming the two electron travel paths inside the blade battery 1 along both the length direction and the width direction. As a result, an electron transmission path during charging and discharging of the cell is shortened, enhancing fast-charging capability, rate performance, and low-temperature performance of the blade battery 1.

In some specific embodiments of the present disclosure, a conductive agent of the positive plate 100 includes conductive carbon black and carbon nanotubes, and a conductive agent of the negative plate 200 includes conductive carbon black.

Further, a mass percentage of the conductive carbon black in the conductive agent of the positive plate 100 ranges from 0.5% to 1.0%, while a mass percentage of the carbon nanotubes in the conductive agent of the positive plate 100 ranges from 0.5% to 1.0%; a mass percentage of the conductive carbon black in the conductive agent of the negative plate 200 ranges from 0.5% to 1.0%. Since electrons in the positive plate 100 and the negative plate 200 travel in different directions, the cell formed by the positive plate 100 and the negative plate 200 exhibits a stronger electron conduction ability. Therefore, a content of the conductive agent can be appropriately reduced, lowering material costs for the conductive agents in the positive plate 100 and the negative plate 200. In addition, by increasing proportions of active substances in the positive plate 100 and the negative plate 200, the energy density of the cell can be improved.

In some specific embodiments of the present disclosure, each of the first tab 101, the second tab 102, the third tab 201, and the fourth tab 202 has a thickness ranging from 1 µm to 20 µm.

Since the first tab 101, the second tab 102, the third tab 201, and the fourth tab 202 have very thin thicknesses, when a plurality of positive plates 100 and a plurality of negative plates 200 are stacked on each other, a plurality of first tabs 101 are stacked on each other, a plurality of second tabs 102 are stacked on each other, a plurality of third tabs 201 are stacked on each other, and a plurality of fourth tabs 202 are stacked on each other. Then, the folded first tabs 101 and the folded second tabs 102 are respectively welded to the positive conductive sheet 320. In this process, the plurality of stacked and folded first tabs 101, the plurality of stacked and folded second tabs 102, and the positive conductive sheet 320 are integrally formed. Similarly, the third tabs 201 and the fourth tabs 202 are respectively welded to the negative conductive sheet 420. In this process, the plurality of stacked and folded third tabs 201, the plurality of stacked and folded fourth tabs 202, and the negative conductive sheet 420 are integrally formed. As a result, the tabs occupy only a small space, ensuring a space utilization rate and the energy density of the blade battery 1.

Usage amounts and effects of conductive agents in the positive plate and the negative plate are described in detail below through experimental examples.

In Example 1 and Example 2, the blade battery 1 of the present disclosure was adopted.

In Example 1, the conductive agent of the positive plate consisted of 0.5% by mass of conductive carbon black and 0.5% by mass of carbon nanotubes, and the conductive agent of the negative plate consisted of 0.5% by mass of conductive carbon black.

In Example 2, the conductive agent of the positive plate consisted of 1.0% by mass of conductive carbon black and 1.0% by mass of carbon nanotubes, and the conductive agent of the negative plate consisted of 1.0% by mass of conductive carbon black.

In Comparative example 1 and Comparative example 2, the blade battery 1' in the related art was adopted, in which the positive cover plate and the negative cover plate are disposed only at two opposite sides, allowing electrons to travel only along the length direction of the blade battery 1'.

In Comparative example 1, the conductive agent of the positive plate consisted of 0.5% by mass of conductive carbon black and 0.5% by mass of carbon nanotubes, and the conductive agent of the negative plate consisted of 0.5% by mass of conductive carbon black.

In Comparative example 2, the conductive agent of the positive plate consisted of 1.0% by mass of conductive carbon black and 1.0% by mass of carbon nanotubes, and the conductive agent of the negative plate consisted of 1.0% by mass of conductive carbon black.

The blade batteries in Example 1, Example 2, Comparative example 1, and Comparative example 2 all have identical dimensions in terms of length, width, and thickness, specifically a length of 654.0 mm, a width of 225.0 mm, and a thickness of 39.0 mm.

Comparisons were made among Example 1, Example 2, Comparative example 1, and Comparative example 2 in terms of alternating current internal resistance (ACR), direct current internal resistance (DCR), a charge-discharge energy efficiency at 0.5 times rated power (0.5 P), a temperature rise during discharging, energy and a temperature rise during discharging at 1.0 times rated power (1.0 P), and cycling performance at 0.5 P of cells.

Table 1 to Table 5 are provided below.

**Table 1: alternating current internal resistance (ACR) and direct current internal resistance (DCR) of cells**

| | ACR (mΩ) | DCR (mΩ) |
|---|---|---|
| Example 1 | 0.08 | 0.16 |
| Example 2 | 0.07 | 0.15 |
| Comparative example 1 | 0.12 | 0.25 |
| Comparative example 2 | 0.11 | 0.23 |

Table 1 reveals that, during charging and discharging of the blade battery 1 of Example 1 and Example 2, electrons can travel along both a length direction and a width length of an electrode plate. In contrast, in the blade battery 1' in the related art of Comparative example 1 and Comparative example 2, electrons can only travel along the length direction. Therefore, as shown in Table 1, the blade battery 1 of Example 1 and Example 2 significantly reduced the alternating current internal resistance and the direct current internal resistance of the cells.

**Table 2: charge-discharge energy efficiency at 0.5 P, temperature rise during discharging, energy and temperature rise during discharging at 1.0 P**

| | Charge energy at 0.5 P (Wh) | Discharge energy at 0.5 P (Wh) | Energy efficiency at 0.5 P (%) | Temperature rise during discharging at 0.5 P(°C) | Charge energy at 1.0 P (Wh) | Discharge energy at 1.0 P (Wh) | Temperature rise during discharging at 1.0 P (°C) |
|---|---|---|---|---|---|---|---|
| Example1 | 2,587.2 | 2,476.8 | 95.7 | 11.5 | 2,548.6 | 2,422.3 | 16.8 |
| Example 2 | 2,546.4 | 2,443.1 | 95.9 | 10.2 | 2,523.3 | 2,413.7 | 14.2 |
| Comparative example 1 | 2,605.9 | 2,433.9 | 93.4 | 15.6 | 2,479.2 | 2,282.5 | 23.5 |
| Comparative example 2 | 2,577.8 | 2,425.7 | 94.1 | 14.3 | 2,470.5 | 2,301.1 | 20.6 |

Table 2 reveals that the blade battery 1 of Example 1 and Example 2 demonstrated a higher charge-discharge energy efficiency compared with the blade battery 1' of Comparative example 1 and Comparative example 2.

The blade battery 1 of Example 1 and Example 2 exhibited a high charge-discharge energy efficiency. Particularly, when charged under high-power conditions such as 1 times rated power (1.0P), the blade battery 1 of Example 1 and Example 2 can store more energy, ensuring sufficient discharge energy from the cell. Further, when discharge power was increased, an advantage in discharge energy became more pronounced. Additionally, the blade battery 1 of Example 1 and Example 2 can reduce both polarization resistance and the temperature rise during discharging, which can reduce side reactions within the cell, prolonging a cycle life. In addition, for an end user, less energy and fewer configurations are required to maintain a temperature of an operation environment of the cell.

**Table 3: discharge energy at 0°C, -10°C, and -30°C under 0.5 P**

| | Charge energy at 0°C (Wh) | Discharge energy at -10°C (Wh) | Discharge efficiency at -30°C (Wh) |
|---|---|---|---|
| Example 1 | 2,323.2 | 2,234.1 | 2,167.2 |
| Example 2 | 2,313.1 | 2,224.8 | 2,153.6 |
| Comparative example 1 | 2,214.8 | 2,119.9 | 1,998.2 |
| Comparative example 2 | 2,217.1 | 2,124.9 | 2,003.6 |

Table 3 reveals that, by comparing the blade battery 1 of Example 1 and Example 2 with the blade battery 1' of Comparative example 1 and Comparative example 2, the blade battery 1 of Example 1 and Example 2 delivered higher discharge energy under low-temperature conditions. When a discharge temperature was further decreased, the advantage in discharge energy became more pronounced.

**Table 4: cycling performance data at room temperature and 0.5 P under constant power**

| | Capacity retention rate after 500 cycles | Capacity retention rate after 1,000 cycles | Capacity retention rate after 2,000 cycles |
|---|---|---|---|
| Example 1 | 96.7% | 93.3% | 89.8% |
| Example 2 | 96.9% | 93.7% | 90.2% |
| Comparative example 1 | 95.1% | 91.2% | 85.7% |
| Comparative example 2 | 95.8% | 92.1% | 86.9% |

Table 4 reveals that, by comparing the blade battery 1 of Example 1 and Example 2 with the blade battery 1' of Comparative example 1 and Comparative example 2, the blade battery 1 of Example 1 and Example 2 maintained a higher capacity retention rate after 500, 1,000, and 2,000 charge cycles, prolonging the cycle life by reducing side reactions within the cell. Moreover, since unit costs of conductive agents are relatively high, reducing usage of the conductive agents helps lower the material costs of the cell.

The blade battery 1 according to embodiments of the present disclosure used the positive plate 100 with the conductive agent consisting of 0.5% to 1.0% by mass of conductive carbon black and 0.5% to 1.0% by mass of carbon nanotubes and the negative plate 200 with the conductive agent consisting of 0.5% to 1.0% by mass of conductive carbon black. Compared with the blade battery in the related art using the same conductive agents, the blade battery 1 according to embodiments of the present disclosure exhibited significantly improved charging and discharging performance and prolonged service life.

**Table 5: discharge energy and volumetric energy density at 0.5 P**

| | Capacity (Ah) | Volumetric energy density (Wh L-1) |
|---|---|---|
| Example 1 | 2,476.8 | 431.6 |
| Example 2 | 2,443.1 | 425.7 |
| Comparative example 1 | 2,433.9 | 424.1 |
| Comparative example 2 | 2,425.7 | 422.7 |

Table 5 reveals that, by comparing the blade battery 1 of Example 1 and Example 2 with the blade battery 1' of Comparative example 1 and Comparative example 2, the blade battery 1 of Example 1 and Example 2 had a higher capacity than the blade battery 1' of Comparative example 1 and Comparative example 2, offering better battery endurance. Additionally, the blade battery 1 of Example 1 and Example 2 achieved a higher volumetric energy density than the blade battery 1' of Comparative example 1 and Comparative example 2.

A battery pack according to embodiments of the present disclosure is described below.

According to an embodiment of the present disclosure, the battery pack includes: a battery case; and a plurality of blade batteries 1 arranged in a thickness direction of the plurality of blade batteries 1 and mounted in the battery case. Each of the plurality of blade batteries 1 is the blade battery 1 according to any of the above embodiments of the present disclosure. Different blade batteries 1 are electrically connected via the positive cover plate 300 and the negative cover plate 400, achieving a greater capacity and a higher energy density.

According to the embodiments of the present disclosure, by using the blade battery 1 according to any of the above embodiments of the present disclosure, the battery pack has advantages such as high charge-discharge energy efficiency, reduced internal resistance, and low energy loss.

Other components and operations of the blade battery 1 and the battery pack according to the embodiments of the present disclosure are known to those skilled in the art, and thus the description thereof in detail will be omitted here.

Reference throughout this specification to "an embodiment", "some embodiments", "illustrative embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A blade battery, comprising:
at least one positive plate, wherein each of the at least one positive plate is provided with a first tab and a second tab that are respectively disposed at two adjacent edges of the positive plate;
a plurality of negative plates, wherein the at least one positive plate and the plurality of negative plates are stacked in a first direction with edges of the at least one positive plate and the plurality of negative plates flush with each other, wherein each of two opposite sides of each of the at least one positive plate in the first direction is covered by one of the plurality of negative plates, and wherein each of the plurality of negative plates is provided with a third tab and a fourth tab that are respectively disposed at two adjacent edges of the negative plate, the first tab and the third tab being located at two opposite sides of the blade battery, respectively, and the second tab and the fourth tab being located at two opposite sides of the blade battery, respectively;
a positive cover plate having a conductive region located at two adjacent sides of the blade battery where the first tab and the second tab are respectively located, wherein the positive cover plate is connected to the first tab and the second tab to form a positive electrode; and
a negative cover plate having a conductive region located at two adjacent sides of the blade battery where the third tab and the fourth tab are respectively located, wherein the negative cover plate is connected to the third tab and the fourth tab to form a negative electrode.

2. The blade battery according to claim 1, wherein:
each of the first tab and the second tab is configured to continuously extend along a corresponding side edge of the positive plate, and each of the third tab and the fourth tab is configured to continuously extend along a corresponding side edge of the negative plate; and/or
each of the first tab, the second tab, the third tab, and the fourth tab is configured as a rectangle or a trapezoid.

3. The blade battery according to claim 1 or 2, wherein:
the first tab and the second tab are bent relative to the positive plate to extend along the first direction and connected to the positive cover plate; and
the third tab and the fourth tab are bent relative to the negative plate to extend along the first direction and connected to the negative cover plate.

4. The blade battery according to claim 1, wherein:
the positive cover plate comprises a positive end plate and a positive conductive sheet connected to the positive end plate at a side of the positive end plate facing the positive plate, the positive conductive sheet being electrically connected to each of the first tab and the second tab; and/or
the negative cover plate comprises a negative end plate and a negative conductive sheet connected to the negative end plate at a side of the negative end plate facing the negative plate, the negative conductive sheet being electrically connected to each of the third tab and the fourth tab.

5. The blade battery according to claim 4, wherein:
the positive conductive sheet comprises:
a first conductive portion attached to the positive end plate and connected to the first tab; and
a second conductive portion connected to the first conductive portion and bent relative to the first conductive portion, the second conductive portion being connected to the second tab; and/or
the negative conductive sheet comprises:
a third conductive portion attached to the negative end plate and connected to the third tab; and
a fourth conductive portion connected to the third conductive portion and bent relative to the third conductive portion, the fourth conductive portion being connected to the fourth tab.

6. The blade battery according to claim 5, wherein:
each of the at least one positive plate and the plurality of negative plates is configured as a rectangle;
the second conductive portion is configured to continuously extend along a long edge of the positive plate; and
the fourth conductive portion is configured to continuously extend along a long edge of the negative plate.

7. The blade battery according to claim 4, wherein:
the positive cover plate further comprises a positive pole, the positive pole passing through the positive end plate and being connected to the positive conductive sheet; and/or
the negative cover plate further comprises a negative pole, the negative pole passing through the negative end plate and being connected to the negative conductive sheet.

8. The blade battery according to claim 4, further comprising:
an encapsulation housing, wherein end faces of the encapsulation housing in a second direction have openings for exposing the positive end plate and the negative end plate, each of the at least one positive plate and the plurality of negative plates being accommodated within the encapsulation housing, and the second direction intersecting the first direction.

9. The blade battery according to claim 4, wherein:
the positive conductive sheet is an aluminum sheet, and the positive conductive sheet is welded to each of the first tab and the second tab; and/or
the negative conductive sheet is a copper sheet, and the negative conductive sheet is welded to each of the third tab and the fourth tab.

10. The blade battery according to claim 1, wherein:
the blade battery is configured as a rectangular parallelepiped; and/or
the blade battery has a length ranging from 500 mm to 1,350 mm; and/or
the blade battery has a thickness ranging from 25 mm to 40 mm; and/or
the blade battery has a width ranging from 200 mm to 319 mm.

11. The blade battery according to claim 1 or 10, wherein:
a ratio of length to thickness of the blade battery ranges from 12.5:1 to 40:1; and/or
a ratio of length to width of the blade battery ranges from 1.57:1 to 6.75:1; and/or
a ratio of width to thickness of the blade battery ranges from 5:1 to 13:1.

12. The blade battery according to claim 1, wherein:
a conductive agent of each of the at least one positive plate comprises conductive carbon black and carbon nanotubes; and/or
a conductive agent of each of the plurality of negative plates comprises conductive carbon black.

13. The blade battery according to claim 12, wherein:
a mass percentage of the conductive carbon black in the conductive agent of each of the at least one positive plate ranges from 0.5% to 1.0%, and a mass percentage of the carbon nanotubes in the conductive agent of each of the at least one positive plate ranges from 0.5% to 1.0%; and
a mass percentage of the conductive carbon black in the conductive agent of each of the plurality of negative plates ranges from 0.5% to 1.0%.

14. The blade battery according to claim 1, wherein each of the first tab, the second tab, the third tab, and the fourth tab has a thickness ranging from 1 µm to 20 µm.

15. A battery pack, comprising:
a battery case; and
a plurality of blade batteries according to any one of claims 1 to 14, wherein the plurality of blade batteries are arranged in a thickness direction of the plurality of blade batteries and mounted in the battery case.
